# EUROPEAN PATENT SPECIFICATION

(11) **EP 3 599 160 B1**
(45) Date of publication and mention of the grant of the patent: **30.08.2023**
(21) Application number: 19163097.9
(22) Date of filing: 15.03.2019
(51) Int. Cl.: B64C 13/50, B64C 27/00

(54) **SYSTEM AND METHOD FOR ROTORCRAFT FLIGHT CONTROL**
SYSTEM UND VERFAHREN ZUR FLUGSTEUERUNG EINES DREHFLÜGLERS
SYSTÈME ET PROCÉDÉ DE COMMANDE DE VOL DE GIRAVION

(30) Priority: 23.07.2018 US 201816042767
(43) Date of publication of application: 29.01.2020
(73) Proprietor: Textron Innovations Inc., Providence, Rhode Island 02903 (US)
(72) Inventor: Worsham II, Robert Earl, Weatherford, WA 76088 (US); Gillett, Luke Dafydd, Grapevine, TX 76051 (US); Bothwell, Christopher M., Grapevine, TX 76051 (US)
(74) Representative: Barker Brettell LLP

(56) References cited:
- EP-A1- 3 492 373
- WO-A1-2015/152910
- US-A1- 2014 363 288
- US-A1- 2015 232 176
- US-A1- 2018 101 180

## Description

### TECHNICAL FIELD

The present invention relates generally to a system and method for automated flight control in a rotorcraft, said control using a flight director system.

### BACKGROUND

A rotorcraft may include one or more rotor systems including one or more main rotor systems. A main rotor system generates aerodynamic lift to support the weight of the rotorcraft in flight and thrust to move the rotorcraft in forward flight. Another example of a rotorcraft rotor system is a tail rotor system. A tail rotor system may generate thrust in the same direction as the main rotor system's rotation to counter the torque effect created by the main rotor system. For smooth and efficient flight in a rotorcraft, a pilot balances the engine power, main rotor collective thrust, main rotor cyclic thrust and the tail rotor thrust, and a control system may assist the pilot in stabilizing the rotorcraft and reducing pilot workload.

EP 3 492 373 (state of the art according to Article 54(3) EPC) discloses a method of indicating flight modes of a rotorcraft including: detecting a change in flight mode of the rotorcraft from a previous flight mode to an active flight mode, the active flight mode and the previous flight mode each being from one of a first subset or a second subset of a plurality of flight modes; determining whether the active flight mode and the previous flight mode are from different subsets of the plurality of flight modes; and updating one or more flight mode indicators on an instrument panel of the rotorcraft in response to the active flight mode and the previous flight mode being from different subsets of the plurality of flight modes.

US 2018/101180 discloses a system and method of controlling flight of an aircraft. The system includes a first inceptor that provides a direct mode command for controlling a control axis of the aircraft according to a direct mode and a second inceptor that provides a stable mode command for controlling the control axis of the aircraft according to a stable mode. A processor receives the direct mode command and the stable mode command, forms a combined command for controlling the control axis of the aircraft based on a combination of the direct mode command and the stable mode command, and controls the control axis of the aircraft according to the combined command.

US 2015/232176 discloses a flight control system having a control law, the control law operable to generate a modified pitch command, the modified pitch command representing a greater amount of collective pitch compared to an amount of collective pitch generated by a first pitch command, the modified pitch command being generated because a vertical descent speed of the rotorcraft at a given forward airspeed is greater than a threshold. A method of avoiding entry into an undesired vertical descent speed region during operation of a rotorcraft, including measuring a forward airspeed; evaluating a vertical descent of the rotorcraft; and generating a modified collective pitch command in respond to a first collective pitch command having a collective pitch value that would cause the rotorcraft to experience a vertical descent rate greater than a threshold value at the forward airspeed of the rotorcraft.

US 2014/363288 discloses a method of assisting in rotor speed control in a rotorcraft including measuring a rotor speed with a sensor; detecting a droop in the rotor speed beyond a lower droop limit; and commanding a decrease in collective in response to the rotor speed drooping beyond the lower droop limit. A system of assisting in rotor speed control in a rotorcraft, the system can include: a computer having a control law, the control law operable to generate an increase collective command to an actuator in response to a rotor speed decreasing below a lower droop limit; wherein the lower droop limit is below a normal lower rotor speed range.

WO 2015/15291 discloses a flight control system for a rotary wing aircraft including a main rotor system and an elevator control system. A flight control computer of the flight control system includes processing circuitry configured to execute control logic. The control logic includes an inverse plant model that produces a main rotor feed forward command based on a pitch rate command, and a load alleviation control filter configured to reduce loads on a main rotor system and produce an elevator command for an elevator control system. A transformed elevator command filter produces a main rotor pitch adjustment command based on the elevator command, and a main rotor command generator generates an augmented main rotor feed forward command for the main rotor system based on the main rotor feed forward command and the main rotor pitch adjustment command.

### SUMMARY

An embodiment rotorcraft includes a fly-by-wire control system, the fly-by-wire control system including a flight control computer (FCC) operable to control flight of the rotorcraft by sending control signals to flight control elements of the rotorcraft. The FCC (205) comprises control laws. The rotorcraft also includes a flight director system coupled to the FCC, wherein the flight director system is configured to receive inputted flight path data; and determine a desired value of a flight characteristic of the rotorcraft, wherein determining the desired value of the flight characteristic is based on the flight path data; receive sensor signals from one or more rotorcraft sensors to determine a current value of the flight characteristic; send a target error signal to the FCC, the target error signal indicating the difference between the desired value of the flight characteristic of the rotorcraft and the current value of the flight characteristic. The FCC is configured to receive the target error signal from the flight director system, determine control signals based on the target error signal using the control laws of the fly-by-wire system, and send the control signals to the flight control elements of the rotorcraft to control the flight of the rotorcraft based on the target error signal. In an embodiment, the desired flight characteristic includes a desired speed of the rotorcraft. In an embodiment, the FCC is further configured to decouple the flight director system from the FCC, the decoupling based on a current flight condition of the rotorcraft. In an embodiment, the FCC is configured to determine control signals based on a flight mode of the FCC.

Another embodiment rotorcraft includes a flight director system for the rotorcraft coupled to a flight control computer (FCC) of the rotorcraft. The flight director system includes a processor and a non-transitory computer-readable storage medium storing a program to be executed by the processor. The program includes instructions for receiving pilot input, generating a flight path based on the pilot input, the flight path including one or more desired flight characteristics, and transmitting a signal representing the one or more desired flight characteristics to the FCC of the rotorcraft. The FCC includes a processor and a non-transitory computer-readable storage medium storing a program to be executed by the processor, the program including instructions for providing control of the rotorcraft. The instructions for providing control of the rotorcraft includes instructions for receiving a signal representing one or more desired flight characteristics from the flight director system of the rotorcraft, generating control signals based on the desired flight characteristics, and transmitting the control signals to one or more flight control elements of the rotorcraft to control the flight of the rotorcraft.

In an embodiment, the one or more desired flight characteristics includes a desired heading of the rotorcraft. In an embodiment, the one or more desired flight characteristics includes a desired bank angle of the rotorcraft. In an embodiment, the pilot input includes selecting a flight mode of the rotorcraft, wherein the flight path is generated based on the selected flight mode. In an embodiment, the flight mode includes a go-around mode.

An embodiment method includes generating, by a navigation system of a rotorcraft, a desired flight path for the rotorcraft. The method also includes transmitting, by the navigation system of the rotorcraft, signals representing the desired flight path to a flight control computer (FCC) of the rotorcraft that includes multiple control laws for controlling the rotorcraft, receiving the signals by the FCC, and controlling, by the FCC, one or more flight control elements of the rotorcraft to control the rotorcraft, wherein the controlling of the one or more flight control elements is based on the desired flight path and the multiple control laws. In an embodiment, the navigation system of the rotorcraft is a flight director system.

In an embodiment, the desired flight path includes a change of vertical speed of the aircraft. In an embodiment, the control laws include a first set of control laws for a first range of rotorcraft speed and a second set of control laws for a second range of rotorcraft speed. In an embodiment, the method includes generating, by the navigation system of the rotorcraft, another desired flight path in response to the FCC controlling one or more flight control elements of the rotorcraft.

### BRIEF DESCRIPTION OF THE DRAWINGS

For a more complete understanding of the present invention, and the advantages thereof, reference is now made to the following descriptions taken in conjunction with the accompanying drawings, in which:
Fig. 1 illustrates a rotorcraft, according to some embodiments;
Fig. 2 illustrates a fly-by-wire flight control system for a rotorcraft, according to some embodiments;
Fig. 3 representatively illustrates a three-loop flight control system, according to some embodiments;
Fig. 4 illustrates a flow diagram for automatic flight control of a rotorcraft, according to some embodiments; and
Fig. 5 illustrates a computer system that may be used to implement embodiment control algorithms.

### DETAILED DESCRIPTION OF ILLUSTRATIVE EMBODIMENTS

Illustrative embodiments of the system and method of the present disclosure are described below. In the interest of clarity, all features of an actual implementation may not be described in this specification. It will of course be appreciated that in the development of any such actual embodiment, numerous implementation-specific decisions may be made to achieve the developer's specific goals, such as compliance with system-related and business-related constraints, which will vary from one implementation to another. Moreover, it should be appreciated that such a development effort might be complex and time-consuming but would nevertheless be a routine undertaking for those of ordinary skill in the art having the benefit of this disclosure.

Reference may be made herein to the spatial relationships between various components and to the spatial orientation of various aspects of components as the devices are depicted in the attached drawings. However, as will be recognized by those skilled in the art after a complete reading of the present disclosure, the devices, members, apparatuses, etc. described herein may be positioned in any desired orientation. Thus, the use of terms such as "above," "below," "upper," "lower," or other like terms to describe a spatial relationship between various components or to describe the spatial orientation of aspects of such components should be understood to describe a relative relationship between the components or a spatial orientation of aspects of such components, respectively, as the device described herein may be oriented in any desired direction.

The increasing use of rotorcraft, in particular, for commercial and industrial applications, has led to the development of larger more complex rotorcraft. However, as rotorcraft become larger and more complex, the differences between flying rotorcraft and fixed wing aircraft has become more pronounced. Since rotorcraft use one or more main rotors to simultaneously provide lift, control attitude, control altitude, and provide lateral or positional movement, different flight parameters and controls are tightly coupled to each other, as the aerodynamic characteristics of the main rotors affect each control and movement axis. For example, the flight characteristics of a rotorcraft at cruising speed or high speed may be significantly different than the flight characteristics at hover or at relatively low speeds. Additionally, different flight control inputs for different axes on the main rotor, such as cyclic inputs or collective inputs, affect other flight controls or flight characteristics of the rotorcraft. For example, pitching the nose of a rotorcraft forward to increase forward speed will generally cause the rotorcraft to lose altitude. In such a situation, the collective may be increased to maintain level flight, but the increase in collective requires increased power at the main rotor which, in turn, requires additional anti-torque force from the tail rotor. This is in contrast to fixed wing systems where the control inputs are less closely tied to each other and flight characteristics in different speed regimes are more closely related to each other.

Recently, fly-by-wire (FBW) systems have been introduced in rotorcraft to assist pilots in stably flying the rotorcraft and to reduce workload on the pilots. The FBW system may provide different control characteristics or responses for cyclic, pedal or collective control input in the different flight regimes, and may provide stability assistance or enhancement by decoupling physical flight characteristics so that a pilot is relieved from needing to compensate for some flight commands issued to the rotorcraft. FBW systems may be implemented in one or more flight control computers (FCCs) disposed between the pilot controls and flight control systems, providing corrections to flight controls that assist in operating the rotorcraft more efficiently or that put the rotorcraft into a stable flight mode while still allowing the pilot to override the FBW control inputs. The FBW systems in a rotorcraft may, for example, automatically adjust power output by the engine to match a collective control input, apply collective or power correction during a cyclic control input, provide automation of one or more flight control procedures, provide for default or suggested control positioning, or the like.

FBW systems for rotorcraft must provide stable flight characteristics for FBW controlled flight parameters while permitting the pilot to override or adjust any suggested flight parameters suggested by the FBW system. Additionally, in providing enhanced control and automated functionality for rotorcraft flight, the FBW system must maintain an intuitive and easy to use flight control system for the pilot. Thus, the FBW system adjusts the pilot flight controls so that the controls are in a position associated with the relevant flight parameter. For example, the FBW system may adjust the collective stick to provide suggested or FBW controlled flight parameters, and which reflect a collective or power setting. Thus, when the pilot releases the collective stick and the FBW system provides collective control commands, the collective stick is positioned intuitively in relation to the actual power or collective setting so that, when the pilot grasps the collective stick to retake control, the control stick is positioned where the pilot expects the stick to be positioned for the actual collective setting of the main rotor. Similarly, the FBW system use the cyclic stick to, for example, adjust for turbulence, drift or other disturbance to the flight path, and may move the cyclic stick as the FBW system compensates the cyclic control. Thus, when the pilot grasps the cyclic stick to take control of flight from the FBW system, the cyclic stick is positioned to reflect the actual cyclic settings.

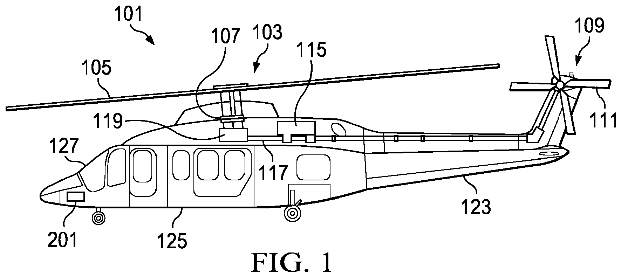

Fig. 1 illustrates a rotorcraft 101 according to some embodiments. The rotorcraft 101 has a main rotor system 103, which includes a plurality of main rotor blades 105. The pitch of each main rotor blade 105 may be controlled by a swashplate 107 in order to selectively control the attitude, altitude and movement of the rotorcraft 101. The swashplate 107 may be used to collectively and/or cyclically change the pitch of the main rotor blades 105. The rotorcraft 101 also has an anti-torque system, which may include a tail rotor 109, no-tail-rotor (NOTAR), or dual main rotor system. In rotorcraft with a tail rotor 109, the pitch of each tail rotor blade 111 is collectively changed in order to vary thrust of the anti-torque system, providing directional control of the rotorcraft 101. The pitch of the tail rotor blades 111 is changed by one or more tail rotor actuators. In some embodiments, the FBW system sends electrical signals to the tail rotor actuators or main rotor actuators to control flight of the rotorcraft.

Power is supplied to the main rotor system 103 and the anti-torque system by engines 115. There may be one or more engines 115, which may be controlled according to signals from the FBW system. The output of the engine 115 is provided to a driveshaft 117, which is mechanically and operatively coupled to the main rotor system 103 and the anti-torque system through a main rotor transmission 119 and a tail rotor transmission 121, respectively.

The rotorcraft 101 further includes a fuselage 125 and tail section 123. The tail section 123 may have other flight control devices such as horizontal or vertical stabilizers, rudder, elevators, or other control or stabilizing surfaces that are used to control or stabilize flight of the rotorcraft 101. The fuselage 125 includes a cockpit 127, which includes displays, controls, and instruments. It should be appreciated that even though rotorcraft 101 is depicted as having certain illustrated features, the rotorcraft 101 may have a variety of implementation-specific configurations. For instance, in some embodiments, cockpit 127 is configured to accommodate a pilot or a pilot and co-pilot, as illustrated. It is also contemplated, however, that rotorcraft 101 may be operated remotely, in which case the cockpit 127 could be configured as a fully functioning cockpit to accommodate a pilot (and possibly a co-pilot as well) to provide for greater flexibility of use, or could be configured with a cockpit having limited functionality (e.g., a cockpit with accommodations for only one person who would function as the pilot operating perhaps with a remote co-pilot or who would function as a co-pilot or back-up pilot with the primary piloting functions being performed remotely). In yet other contemplated embodiments, rotorcraft 101 could be configured as an unmanned vehicle, in which case the cockpit 127 could be eliminated entirely in order to save space and cost.

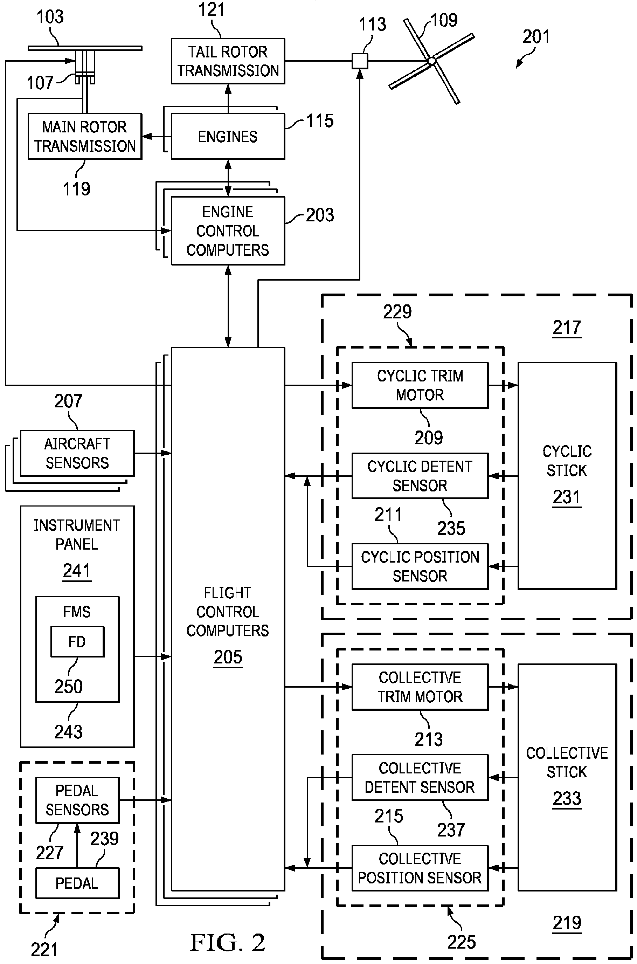

Fig. 2 illustrates a fly-by-wire flight control system 201 for a rotorcraft according to some embodiments. A pilot may manipulate one or more pilot flight controls in order to control flight of the rotorcraft. The pilot flight controls may include manual controls such as a cyclic stick 231 in a cyclic control assembly 217, a collective stick 233 in a collective control assembly 219, and pedals 239 in a pedal control assembly 221. Inputs provided by the pilot to the pilot flight controls may be transmitted electronically (i.e. via the FBW flight control system) to flight control elements by the flight control system 201. Flight control elements represent devices operable to change the flight characteristics of the rotorcraft. Flight control elements on the rotorcraft may include mechanical and/or electrical systems operable to change the positions or angle of attack of the main rotor blades 105 and the tail rotor blades 111 or to change the power output of the engines 115, as examples. Flight control elements include systems such as the swashplate 107, tail rotor actuator 113, and systems operable to control the engines 115. The flight control system 201 may adjust the flight control elements independently of the flight crew in order to stabilize the rotorcraft, reduce workload of the flight crew, and the like. The flight control system 201 includes engine control computers (ECCUs) 203, flight control computers (FCCs) 205, and aircraft sensors 207, which collectively adjust the flight control elements.

The flight control system 201 has one or more FCCs 205. In some embodiments, multiple FCCs 205 are provided for redundancy. One or more modules within the FCCs 205 may be partially or wholly embodied as software and/or hardware for performing any functionality described herein. In embodiments where the flight control system 201 is a FBW flight control system, the FCCs 205 may analyze pilot inputs and dispatch corresponding commands to flight control elements such as the ECCUs 203, the tail rotor actuator 113, actuators for the swashplate 107, or other components used to control operation of the rotorcraft. Further, the FCCs 205 are configured and receive input commands from the pilot controls through sensors associated with each of the pilot flight controls. The input commands are received by measuring the positions of the pilot controls. The FCCs 205 also control tactile cueing commands to the pilot controls or display information in instruments on, for example, an instrument panel 241.

In some embodiments, the instrument panel 241 includes a flight management system (FMS) 243. The FMS 243 may include a GPS, a mapping system, a navigation system, or other types of systems. In some embodiments, the flight director system ("FD") 250 may be included as part of the FMS 243, such as a subsystem of the FMS 243 or as a navigation system of the FMS 243. In some embodiments, the FD 250 and/or the FMS 243 may be communicatively coupled with the FCCs 205, and may send data to the FCCs 205 or receive data from the FCCs 205. The FD 250 may include an input (not separately illustrated), such as a keypad, a touchscreen, or the like, which may be used by the pilot to enter commands, data, and the like into the FD 250 of the FMS 243. The FD 250 may further include a display which may be used to provide information to the pilot, such as guidance cues for performing a Cat-A takeoff procedure.

In some embodiments, the FD 250 may be configured to send signals representing flight control targets to the FCCs 205, and may be configured to receive coupling logic signals from the FCCs 205. The FD 250 and FCCs 205 may be able to send or receive other signals, such as sensor signals, target error signals, command signals, or other types of signals. In some embodiments, the FD 250 is communicatively coupled to the FCCs by a communications bus such as a serial bus, a CAN bus, or another type of wired or wireless communication system. In some embodiments, the FD 250 includes an autopilot function that provides automatic flight control for the aircraft.

The ECCUs 203 control the engines 115. For example, the ECCUs 203 may vary the output power of the engines 115 to control the rotational speed of the main rotor blades or the tail rotor blades. The ECCUs 203 may control the output power of the engines 115 according to commands from the FCCs 205, or may do so based on feedback such a measured revolutions per minute (RPM) of the main rotor blades.

The aircraft sensors 207 are in communication with the FCCs 205. The aircraft sensors 207 may include sensors for measuring a variety of rotorcraft systems, flight parameters, environmental conditions and the like. For example, the aircraft sensors 207 may include sensors for measuring airspeed, altitude, attitude, position, orientation, temperature, airspeed, vertical speed, and the like. Other aircraft sensors 207 could include sensors relying upon data or signals originating external to the rotorcraft, such as a global positioning system (GPS) sensor, a VHF Omnidirectional Range sensor, Instrument Landing System (ILS), and the like. In some cases, some aircraft sensors 207 are part of or connected to the FD 250.

The cyclic control assembly 217 is connected to a cyclic trim assembly 229 having one or more cyclic position sensors 211, one or more cyclic detent sensors 235, and one or more cyclic actuators or cyclic trim motors 209. The cyclic position sensors 211 measure the position of the cyclic stick 231. In some embodiments, the cyclic stick 231 is a single control stick that moves along two axes and permits a pilot to control pitch, which is the vertical angle of the nose of the rotorcraft and roll, which is the side-to-side angle of the rotorcraft. In some embodiments, the cyclic control assembly 217 has separate cyclic position sensors 211 that measure roll and pitch separately. The cyclic position sensors 211 for detecting roll and pitch generate roll and pitch signals, respectively, (sometimes referred to as cyclic longitude and cyclic latitude signals, respectively) which are sent to the FCCs 205, which controls the swashplate 107, engines 115, tail rotor 109 or related flight control devices.

The cyclic trim motors 209 are connected to the FCCs 205, and receive signals from the FCCs 205 to move the cyclic stick 231. In some embodiments, the FCCs 205 determine a suggested cyclic stick position for the cyclic stick 231 according to one or more of the collective stick position, the pedal position, the speed, altitude and attitude of the rotorcraft, the engine revolutions per minute (RPM), engine temperature, main rotor RPM, engine torque or other rotorcraft system conditions or flight conditions. The suggested cyclic stick position is a positon determined by the FCCs 205 to give a desired cyclic action. In some embodiments, the FCCs 205 send a suggested cyclic stick position signal indicating the suggested cyclic stick position to the cyclic trim motors 209. While the FCCs 205 may command the cyclic trim motors 209 to move the cyclic stick 231 to a particular position (which would in turn drive actuators associated with swashplate 107 accordingly), the cyclic position sensors 211 detect the actual position of the cyclic stick 231 that is set by the cyclic trim motors 209 or input by the pilot, allowing the pilot to override the suggested cyclic stick position. The cyclic trim motor 209 is connected to the cyclic stick 231 so that the pilot may move the cyclic stick 231 while the trim motor is driving the cyclic stick 231 to override the suggested cyclic stick position. Thus, in some embodiments, the FCCs 205 receive a signal from the cyclic position sensors 211 indicating the actual cyclic stick position, and do not rely on the suggested cyclic stick position to command the swashplate 107.

Similar to the cyclic control assembly 217, the collective control assembly 219 is connected to a collective trim assembly 225 having one or more collective position sensors 215, one or more collective detent sensors 237, and one or more collective actuators or collective trim motors 213. The collective position sensors 215 measure the position of a collective stick 233 in the collective control assembly 219. In some embodiments, the collective stick 233 is a single control stick that moves along a single axis or with a lever type action. A collective position sensor 215 detects the position of the collective stick 233 and sends a collective position signal to the FCCs 205, which controls engines 115, swashplate actuators, or related flight control devices according to the collective position signal to control the vertical movement of the rotorcraft. In some embodiments, the FCCs 205 may send a power command signal to the ECCUs 203 and a collective command signal to the main rotor or swashplate actuators so that the angle of attack of the main blades is raised or lowered collectively, and the engine power is set to provide the needed power to keep the main rotor RPM substantially constant.

The collective trim motor 213 is connected to the FCCs 205, and receives signals from the FCCs 205 to move the collective stick 233. Similar to the determination of the suggested cyclic stick position, in some embodiments, the FCCs 205 determine a suggested collective stick position for the collective stick 233 according to one or more of the cyclic stick position, the pedal position, the speed, altitude and attitude of the rotorcraft, the engine RPM, engine temperature, main rotor RPM, engine torque or other rotorcraft system conditions or flight conditions. The FCCs 205 generate the suggested collective stick position and send a corresponding suggested collective stick signal to the collective trim motors 213 to move the collective stick 233 to a particular position. The collective position sensors 215 detect the actual position of the collective stick 233 that is set by the collective trim motor 213 or input by the pilot, allowing the pilot to override the suggested collective stick position.

The pedal control assembly 221 has one or more pedal sensors 227 that measure the position of pedals or other input elements in the pedal control assembly 221. In some embodiments, the pedal control assembly 221 is free of a trim motor or actuator, and may have a mechanical return element that centers the pedals when the pilot releases the pedals. In other embodiments, the pedal control assembly 221 has one or more trim motors that drive the pedal to a suggested pedal position according to a signal from the FCCs 205. The pedal sensor 227 detects the position of the pedals 239 and sends a pedal position signal to the FCCs 205, which controls the tail rotor 109 to cause the rotorcraft to yaw or rotate around a vertical axis.

The trim motors 209 and 213 may drive the cyclic stick 231 and collective stick 233, respectively, to suggested positions. The trim motors 209 and 213 may drive the cyclic stick 231 and collective stick 233, respectively, to suggested positions, but this movement capability may also be used to provide tactile cueing to a pilot. The trim motors 209 and 213 may push the respective stick in a particular direction when the pilot is moving the stick to indicate a particular condition. Since the FBW system mechanically disconnects the stick from one or more flight control devices, a pilot may not feel a hard stop, vibration, or other tactile cue that would be inherent in a stick that is mechanically connected to a flight control assembly. In some embodiments, the FCCs 205 may cause the trim motors 209 and 213 to push against a pilot command so that the pilot feels a resistive force, or may command one or more friction devices to provide friction that is felt when the pilot moves the stick. Thus, the FCCs 205 control the feel of a stick by providing pressure and/or friction on the stick.

Additionally, the cyclic control assembly 217, collective control assembly 219 and/or pedal control assembly 221 may each have one or more detent sensors that determine whether the pilot is handling a particular control device. For example, the cyclic control assembly 217 may have a cyclic detent sensor 235 that determines that the pilot is holding the cyclic stick 231, while the collective control assembly 219 has a collective detent sensor 237 that determines whether the pilot is holding the collective stick 233. These detent sensors 235, 237 detect motion and/or position of the respective control stick that is caused by pilot input, as opposed to motion and/or position caused by commands from the FCCs 205, rotorcraft vibration, and the like and provide feedback signals indicative of such to the FCCs 205. When the FCCs 205 detect that a pilot has control of, or is manipulating, a particular control, the FCCs 205 may determine that stick to be out-of-detent (OOD). Likewise, the FCCs may determine that the stick is in-detent (ID) when the signals from the detent sensors indicate to the FCCs 205 that the pilot has released a particular stick. The FCCs 205 may provide different default control or automated commands to one or more flight systems based on the detent status of a particular stick or pilot control.

The cyclic control assembly 217 and/or the collective control assembly 219 may further include at least one beep switch (not shown) on the cyclic stick 231 and/or the collective stick 233. The beep switch is generally used to adjust steady-state functionality of the rotorcraft 101 when displaced away from a neutral position toward a deflected position. The beep switch may be deflected within a plane along an x-axis and along a y-axis. The beep switch may simultaneously have non-zero deflection values for both the x-axis and the y-axis. In some embodiments, the beep switch is configured to return to a center-x / center-y neutral location when the pilot removes manipulative force from, or is no longer in contact with, the beep switch. In this sense, the beep switch operates in similar fashion and function as a joystick or control column (e.g., an input device having a stick that pivots on a base and reports an angle or direction of deflection away from a neutral position).

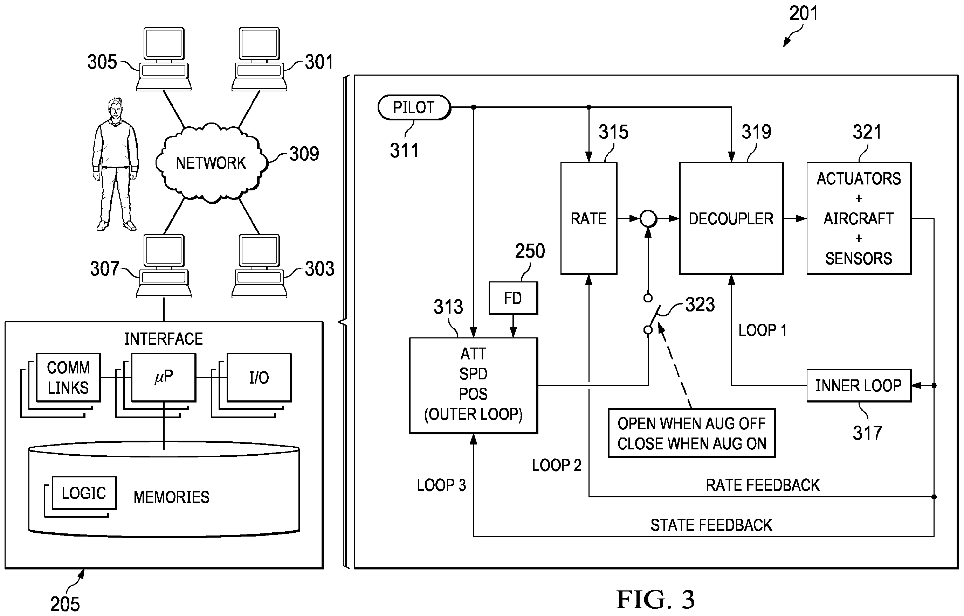

Moving now to the operational aspects of flight control system 201, Fig. 3 illustrates in a highly schematic fashion, a manner in which flight control system 201 may implement FBW functions as a series of inter-related feedback loops running certain control laws (sometimes referred to herein as "CLAWS"). Fig. 3 representatively illustrates a three-loop flight control system 201 according to an embodiment. In some embodiments, elements of the flight control system 201 may be implemented at least partially by FCCs 205.

The flight control system 201 of Fig. 3 has a pilot input 311, an outer loop 313, a rate (middle) loop 315, an inner loop 317, a decoupler 319, and aircraft equipment 321 (corresponding, e.g., to flight control elements such as swashplate 107, tail rotor transmission 121, etc., to actuators (not shown) driving the flight control elements, to sensors such as aircraft sensors 207, position sensors 211, 215, detent sensors 235, 237, etc., and the like).

In the example of Fig. 3, a three-loop design separates the inner stabilization and rate feedback loops from outer guidance and tracking loops. The control law structure primarily assigns the overall stabilization task and related tasks of reducing pilot workload to inner loop 317. Next, middle loop 315 provides rate augmentation. Outer loop 313 focuses on guidance and tracking tasks. Since inner loop 317 and rate loop 315 provide most of the stabilization, less control effort is required at the outer loop level. As representatively illustrated in Fig. 3, a switch 323 may be provided to turn outer loop flight augmentation on and off, the tasks of outer loop 313 are not necessary for flight stabilization.

The inner loop 317 and rate loop 315 may include a set of gains and filters applied to roll/pitch/yaw 3-axis rate gyro and acceleration feedback sensors. Both the inner loop and rate loop may stay active, independent of various outer loop hold modes. Outer loop 313 may include cascaded layers of loops, including an attitude loop, a speed loop, a position loop, a vertical speed loop, an altitude loop, and a heading loop. In accordance with some embodiments, the control laws running in the illustrated loops allow for decoupling of otherwise coupled flight characteristics, which in turn may provide for more stable flight characteristics and reduced pilot workload. Furthermore, the outer loop 313 may allow for automated or semi-automated operation of certain high-level tasks or flight patterns, thus further relieving the pilot workload and allowing the pilot to focus on other matters including observation of the surrounding terrain.

The FD 250 may be coupled to the outer loop 313 of the flight control system 201. The FD 250 may be coupled to the flight control system 201 in this manner by being communicatively coupled to the FCCs 205 that implement some or all of the relevant features (e.g., the loops 313, 315, 317, the decoupler 319, etc.) of the flight control system 201. The FD 250 may implement automatic flight control by communicating with the FCCs 205 and allowing the FCCs 205 to control flight operation of the aircraft. The FCCs 205 may be configured to receive and analyze inputs from the FD 250 and dispatch corresponding commands to flight control elements such as the ECCUs 203, the tail rotor actuator 113, actuators for the swashplate 107, or other components used to control operation of the rotorcraft. For example, the FD 250 may send information about desired flight characteristics or flight path targets to the FCCs 205, and the FCCs 205 may then send control signals to flight control elements to in accordance with the CLAWS to achieve the desired flight characteristics or flight path targets determined by the FD 250.

In some aircraft, a flight director ("FD") may directly control the flight of the aircraft using commands generated in terms of a pitch and roll attitude and collective command, or in terms of an autothrottle command. However, the use of an FD to directly control the aircraft may limit a flight mode to a particular axis or may limit application of FD control laws to high speed flight. However, using the FCCs to control aircraft flight based on FD commands sent to the FCCs, as described herein, allows the FCCs to control the aircraft according to the flight envelope of the CLAWS. In this manner, the CLAWS, which are designed for all flight regimes, may be used for different flight modes of the FD. For example, the CLAWS may be used for flight modes of the FD for low speed and/or low altitude operation, or other types of FD flight modes.

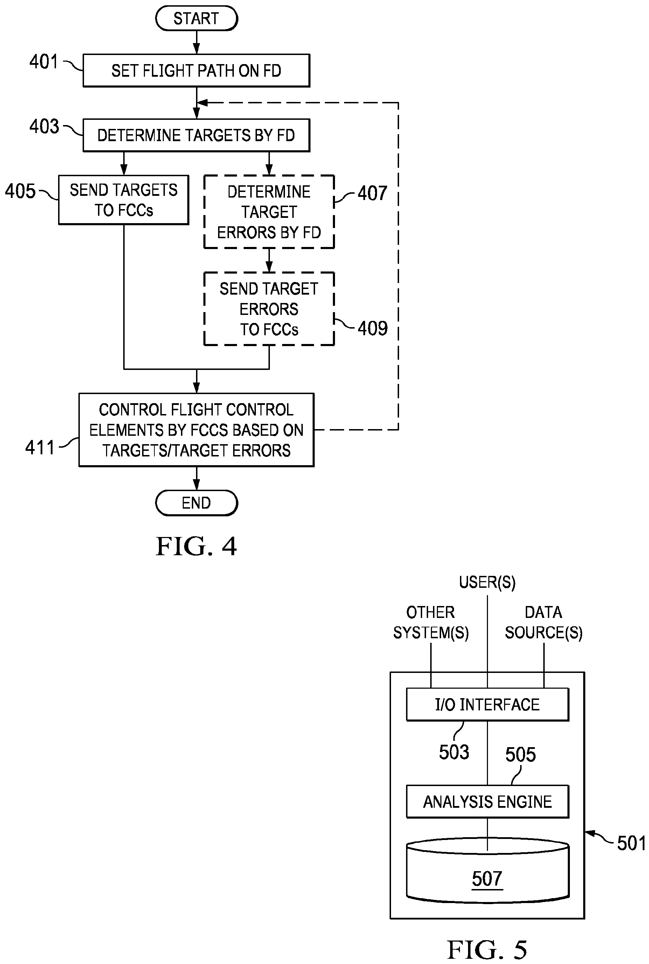

Fig. 4 illustrates a flow diagram for controlling the flight characteristics of an aircraft, according to an embodiment. The flow diagram shown in Fig. 4 is indicative of operations performed by the FD 250 and the FCCs 205 when operating the automatic flight control of the FD 250. In step 401, a desired flight path is set for the FD 250. The flight path may, for example, be set by a pilot using the interactive controls of the FD 250. In some cases, the flight path may include more than one waypoint, more than one location, or include multiple sub-paths. In some cases of a flight path having multiple locations, waypoints, or sub-paths, setting the flight path may include setting the next waypoint or the next sub-path, for example, after the current waypoint is reached or after the current sub-path is completed. In some embodiments, the set flight path may include one or more particular flight characteristics such as particular altitudes, airspeeds, ground speeds, vertical speeds, rates, headings, bank angles, a combination of these, or the like.

In step 403, the FD 250 determines one or more flight characteristic targets from the set flight path of step 401. The targets include one or more desired flight characteristics determined by the FD 250 to achieve the set flight path. The flight characteristic targets may be the same as flight characteristics of the set flight path or may include different, fewer, or more flight characteristics. For example, the targets may include one or more of a desired altitude, a desired vertical speed, a desired airspeed, a desired bank angle, a desired heading, etc. In some cases, the targets may be input as part of the flight path set in step 401, such as a particular altitude or speed set by a pilot. In some cases, the targets may be determined based on the set flight path. For example, the set flight path may include a destination waypoint, and the targets may include a target airspeed for the aircraft to achieve as it approaches the waypoint. In some cases, the targets may be determined according to a flight mode. Example flight modes include maintaining an altitude (e.g., altitude hold mode), a speed (e.g., airspeed hold mode, vertical speed hold mode), a heading (e.g., heading hold mode), a position, etc. In some cases, some flight modes may include a predetermined flight path, such as a go-around mode, an approach mode, a hover mode, etc. In some cases, the flight mode may be selected by a pilot, for example, through an interface of the FD 250. In some cases, the targets may be determined using navigation data or terrain data. In some cases, the targets may be determined using an algorithm implemented by the FD 250. These are examples, and other flight characteristic targets may be determined by the FD 250 using other techniques, and are within the scope of this disclosure.

In an example not covered by the appended claims, in step 405, the FD 250 might send signals to the FCCs 205 representing the flight characteristic targets determined in step 403.

According to the invention, the FD 250 determines a target error in step 407 and sends a signal representing the target error to the FCCs 205 in step 409. The FD 250 may determine a target error based on a difference between a target determined in step 403 and feedback received by sensors on the aircraft. For example, for an airspeed target determined in step 403, during flight the FD 250 may receive signals from aircraft sensors indicating the current airspeed of the aircraft and subtract the indication of current airspeed from the airspeed target to generate an airspeed target error. The FD 250 then sends an indication of the airspeed target error to the FCCs 205 (in step 409). This is an example, and other types of target errors may be determined or additional processing may be performed. The FD 250 may send the target error signals of step 407 instead of or in addition to the target signals of step 405.

In step 411, the FCCs 205 receive the signals from the FD 250 indicating flight characteristic target errors (from step 409), and control the flight characteristics of the aircraft according to the received signals. The FCCs 205 are able to control the flight control elements of the aircraft according to the CLAWS of the flight control system 201. For example, the FCCs 205 may receive a target bank angle error signal from the FD 250 and, based on the CLAWS, send control signals to the flight control elements of the aircraft to achieve a target bank angle. This is an example, and other types of flight characteristics may be controlled by the FCCs 205 based on signals from the FD 250.

In some embodiments, the process may then return to step 403, and the FD 250 may then determine new flight characteristic target error signals and send these signals to the FCCs 205 as described in steps 403-411. For example, the FD 250 may update the targets based on changed flight characteristics of the aircraft, based on completion of a portion of the flight path set in step 401, or based on a change to the set flight path. In some cases, the FD 250 may determine new target error signals based on feedback signals from the FCCs 205.

By having the FD 250 send signals to the FCCs 205 to control the aircraft rather than the FD 250 directly controlling the aircraft, the CLAWS of the flight control system 201 may be used to provide more efficient automatic flight control. For example, by using the FCCs 205 to generate the appropriate control signals for the flight control elements of the aircraft rather than the control signals being generated by the FD 250, the amount of processing or calculations that the FD 250 performs is reduced. In this manner, the response speed or bandwidth of the FD 250 may be improved, and the efficiency of the automatic flight control of the FD 250 may be increased.

The use of the CLAWS to generate the appropriate control signals may also improve stability or safety of the automatic flight control of the FD 250. For example, the CLAWS of the flight control system 201 may include different flight control operations in different flight regimes, such as different flight control operations for lower aircraft speeds and for higher aircraft speeds. In this manner, the automatic flight control of the FD 250 may provide more stable flight in, for example, lower aircraft speeds, since the CLAWS are configured to control the flight characteristics of the aircraft in a manner appropriate for lower aircraft speeds. Thus, the FCCs 205 may control the flight characteristics according to a flight mode of the CLAWS and the signals received from the FD 250. Additionally, this may also allow the automatic flight control of the FD 250 to be safely (or more safely) used in a wider variety of flight conditions (e.g., lower aircraft speeds, higher altitudes, etc.) than would be available without the use of the CLAWS. In some cases, the use of the CLAWS may reduce the chance of the aircraft entering an unsafe flight condition (e.g., a vortex ring state) while attempting to achieve a flight characteristic target determined by the FD 250. Coupling the FD 250 to the FCCs 205 in this manner can improve efficiency of aircraft control, as the CLAWS can utilize the most efficient axis for a particular desired flight characteristic change under the aircraft's current conditions. Additionally, in some cases, the FCCs 205 may be more reliable than the FD 250, and thus using the FCCs 205 to control the aircraft can also improve safety when the FD 250 is used.

In some embodiments, the logic that permits operation of the automatic flight control of the FD 250 may also be included in or based on the CLAWS. For example, the CLAWS may determine that the aircraft is in an unsafe situation to allow automatic flight control of the FD 250, and send a signal to the FD 250 to terminate or disallow the automatic flight control. An indication may be given (e.g., on the FD 250 or the instrument panel 241) that the aircraft is in a safe or unsafe situation for automatic flight.

Moreover, by using the FCCs 205 to send control signals to flight control elements rather than using the FD 250, an FD 250 unit may require less adaptation to be used with a specific type of aircraft. For example, a FD 250 unit may not need to be preprogrammed to send the specific control signals required by the specific type of aircraft on which the FD 250 is installed, as the CLAWS of the aircraft's flight control system 201 are configured to perform this task. Moreover, because the CLAWS of an aircraft's flight control system 201 are configured for that specific type of aircraft, a single type of FD 250 unit may be more easily adapted for use on a variety of types of aircraft. Less time or expense may be required to install an FD 250 unit on an aircraft if less adaptation is required. Using the same type of FD 250 unit on different aircraft may allow for a more uniform experience for a pilot flying the different aircraft. A uniformity of FD 250 units across various aircraft may allow the pilot experience to be consistent across newer and older rotorcraft for a pilot that is familiar with using the FD 250. During high workload situations, providing the pilot with a more consistent and familiar user experience may improve flight safety.

Fig. 5 illustrates a computer system 501. The computer system 501 can be configured for performing one or more functions with regard to the operation of the flight control system 201 or the FD 250, as described herein. Further, any processing and analysis can be partly or fully performed by the computer system 501. The computer system 501 can be partly or fully integrated with other aircraft computer systems or can be partly or fully removed from the rotorcraft.

The computer system 501 can include an input/output (I/O) interface 503, an analysis engine 505, and a database 507. Alternative embodiments can combine or distribute the I/O interface 503, the analysis engine 505, and the database 507, as desired. Embodiments of the computer system 501 may include one or more computers that include one or more processors and memories configured for performing tasks described herein. This can include, for example, a computer having a central processing unit (CPU) and non-volatile memory that stores software instructions for instructing the CPU to perform at least some of the tasks described herein. This can also include, for example, two or more computers that are in communication via a computer network, where one or more of the computers include a CPU and non-volatile memory, and one or more of the computer's non-volatile memory stores software instructions for instructing any of the CPU(s) to perform any of the tasks described herein. Thus, while the exemplary embodiment is described in terms of a discrete machine, it should be appreciated that this description is non-limiting, and that the present description applies equally to numerous other arrangements involving one or more machines performing tasks distributed in any way among the one or more machines. It should also be appreciated that such machines need not be dedicated to performing tasks described herein, but instead can be multi-purpose machines, for example computer workstations, that are suitable for also performing other tasks.

The I/O interface 503 can provide a communication link between external users, systems, and data sources and components of the computer system 501. The I/O interface 503 can be configured for allowing one or more users to input information to the computer system 501 via any known input device. Examples can include a keyboard, mouse, touch screen, and/or any other desired input device. The I/O interface 503 can be configured for allowing one or more users to receive information output from the computer system 501 via any known output device. Examples can include a display monitor, a printer, cockpit display, and/or any other desired output device. The I/O interface 503 can be configured for allowing other systems to communicate with the computer system 501. For example, the I/O interface 503 can allow one or more remote computer(s) to access information, input information, and/or remotely instruct the computer system 501 to perform one or more of the tasks described herein. The I/O interface 503 can be configured for allowing communication with one or more remote data sources. For example, the I/O interface 503 can allow one or more remote data source(s) to access information, input information, and/or remotely instruct the computer system 501 to perform one or more of the tasks described herein.

The database 507 provides persistent data storage for the computer system 501. Although the term "database" is primarily used, a memory or other suitable data storage arrangement may provide the functionality of the database 507. In alternative embodiments, the database 507 can be integral to or separate from the computer system 501 and can operate on one or more computers. The database 507 preferably provides non-volatile data storage for any information suitable to support the operation of the flight control system 201 and the method 500, including various types of data discussed further herein. The analysis engine 505 can include various combinations of one or more processors, memories, and software components.

Although this invention has been described with reference to illustrative embodiments, this description is not intended to be construed in a limiting sense. The invention and embodiments thereof are defined in the appended claims.

## Claims

1. A rotorcraft (101) comprising:
a fly-by-wire control system (201) comprising a flight control computer, FCC, (205) operable to control flight of the rotorcraft by sending control signals to flight control elements of the rotorcraft wherein the FCC (205) comprises control laws; and
a flight director system (250) coupled to the FCC (205), wherein the flight director system is configured to:
receive inputted flight path data; and determine a desired value of a flight characteristic of the rotorcraft (101), wherein determining the desired value of the flight characteristic is based on the flight path data;
receive sensor signals from one or more rotorcraft sensors (207) to determine a current value of the flight characteristic;
determine a difference between the desired value of a flight characteristic and the current value of the flight characteristic,
send a target error signal to the FCC (205), the target error signal indicating the difference between the desired value of a flight characteristic and the current value of the flight characteristic;
wherein the FCC (205) is configured to:
receive the target error signal from the flight director system (250);
determine control signals based on the target error signal, using the control laws of the fly-by-wire control system (201); and
send the control signals to the flight control elements of the rotorcraft to control the flight of the rotorcraft based on the target error signal.

2. The rotorcraft (101) of claim 1, wherein the desired flight characteristic comprises a desired speed of the rotorcraft.

3. The rotorcraft (101) of any preceding claim, wherein the FCC (205) is further configured to decouple an automatic flight control of the flight director system from the FCC, the decoupling based on a current flight condition of the rotorcraft.

4. The rotorcraft of any preceding claim, wherein the FCC (205) is configured to determine control signals based on a flight mode of the FCC.

5. The rotorcraft of any preceding claim, wherein:
the flight director system (250) comprises:
a processor; and
a non-transitory computer-readable storage medium storing a program to be executed by the processor, the program including instructions for:
receiving pilot input;
generating a flight path based on the pilot input, the flight path comprising one or more desired flight characteristics; and
transmitting a signal representing the one or more desired flight characteristics to the FCC (205) of the rotorcraft;
wherein the FCC (205) comprises:
a processor;
control laws and
a non-transitory computer-readable storage medium storing a program to be executed by the processor, the program including instructions for providing control of the rotorcraft, the instructions for providing control of the rotorcraft including instructions for:
receiving a signal representing one or more desired flight characteristics from the flight director system of the rotorcraft;
generating control signals based on the desired flight characteristics and the control laws; and
transmitting the control signals to one or more flight control elements of the rotorcraft to control the flight of the rotorcraft.

6. The rotorcraft of claim 5, wherein the one or more desired flight characteristics comprises a desired heading of the rotorcraft and/or a desired bank angle of the rotorcraft.

7. The rotorcraft of claim 5 or claim 6, wherein the pilot input comprises selecting a flight mode of the rotorcraft, and wherein the flight path is generated based on the selected flight mode; and optionally or preferably, wherein the flight mode comprises a go-around mode.

8. A method, comprising:
generating, by a navigation system of a rotorcraft (101), a desired flight path for the rotorcraft;
transmitting, by the navigation system of the rotorcraft, signals representing the desired flight path to a flight control computer, FCC, (205) of the rotorcraft, the FCC comprising a plurality of control laws for controlling the rotorcraft, wherein the signals representing the desired flight path comprise target signals representing one or more desired flight characteristics of the desired flight path
receiving the signals by the FCC; and
controlling, by the FCC, one or more flight control elements of the rotorcraft to control the rotorcraft, wherein the controlling of the one or more flight control elements is based on the desired flight path and the plurality of control laws.

9. The method of claim 8, wherein the navigation system of the rotorcraft is a flight director system.

10. The method of claim 8 or claim 9, wherein the desired flight path comprises a change of vertical speed of the aircraft.

11. The method of any one of claims 8 to 10, wherein the control laws comprise a first set of control laws for a first range of rotorcraft speed and a second set of control laws for a second range of rotorcraft speed.

12. The method of any one of claims 8 to 11, further comprising generating, by the navigation system of the rotorcraft, another desired flight path in response to the FCC controlling one or more flight control elements of the rotorcraft.

## Patentansprüche

1. Drehflügler (101), umfassend:
ein Fly-by-Wire-Steuerungssystem (201), das einen Flugsteuerungsrechner, FCC, (205) umfasst, der dazu betreibbar ist, den Flug des Drehflüglers durch Senden von Steuersignalen an Flugsteuerungselemente des Drehflüglers zu steuern, wobei der FCC (205) Steuerungsgesetze umfasst; und
ein Flugführungssystem (250), das mit dem FCC (205) gekoppelt ist, wobei das Flugführungssystem dazu ausgelegt ist:
eingegebene Flugbahndaten zu empfangen und einen Sollwert einer Flugeigenschaft des Drehflüglers (101) zu bestimmen, wobei das Bestimmen des Sollwerts der Flugeigenschaft auf den Flugbahndaten basiert;
Sensorsignale aus einem oder mehreren Drehflüglersensoren (207) zu empfangen, um einen Istwert der Flugeigenschaft zu bestimmen;
eine Differenz zwischen dem Sollwert einer Flugeigenschaft und dem Istwert der Flugeigenschaft zu bestimmen,
ein Sollfehlersignal an den FCC (205) zu senden, wobei das Sollfehlersignal die Differenz zwischen dem Sollwert einer Flugeigenschaft und dem Istwert der Flugeigenschaft angibt;
wobei der FCC (205) dazu ausgelegt ist:
das Sollfehlersignal aus dem Flugführungssystem (250) zu empfangen;
Steuersignale basierend auf dem Sollfehlersignal unter Verwendung der Steuerungsgesetze des Fly-by-Wire-Steuerungssystems (201) zu bestimmen; und
die Steuersignale an die Flugsteuerungselemente des Drehflüglers zu senden, um den Flug des Drehflüglers basierend auf dem Sollfehlersignal zu steuern.

2. Drehflügler (101) gemäß Anspruch 1, wobei die Sollflugeigenschaft eine Sollgeschwindigkeit des Drehflüglers umfasst.

3. Drehflügler (101) gemäß einem der vorhergehenden Ansprüche, wobei der FCC (205) ferner dazu ausgelegt ist, eine automatische Flugsteuerung des Flugführungssystems vom FCC zu entkoppeln, wobei das Entkoppeln auf einem aktuellen Flugzustand des Drehflüglers basiert.

4. Drehflügler gemäß einem der vorhergehenden Ansprüche, wobei der FCC (205) dazu ausgelegt ist, Steuersignale basierend auf einem Flugmodus des FCC zu bestimmen.

5. Drehflügler gemäß einem der vorhergehenden Ansprüche, wobei:
das Flugführungssystem (250) umfasst:
einen Prozessor; und
ein nichtflüchtiges, computerlesbares Speichermedium, das ein durch den Prozessor auszuführendes Programm speichert, wobei das Programm Anweisungen enthält zum:
Empfangen von Piloteneingaben;
Erzeugen einer Flugbahn basierend auf den Piloteneingaben, wobei die Flugbahn eine oder mehrere Sollflugeigenschaften umfasst; und
Übertragen eines Signals, das die Sollflugeigenschaften repräsentiert, an den FCC (205) des Drehflüglers ;
wobei der FCC (205) umfasst:
einen Prozessor;
Steuerungsgesetze und
ein nichtflüchtiges, computerlesbares Speichermedium, das ein durch den Prozessor auszuführendes Programm speichert, wobei das Programm Anweisungen zum Bereitstellen der Steuerung des Drehflüglers enthält, wobei die Anweisungen zum Bereitstellen der Steuerung des Drehflüglers Anweisungen enthalten zum:
Empfangen eines Signals, das eine oder mehrere Sollflugeigenschaften aus dem Flugführungssystem des Drehflüglers repräsentiert;
Erzeugen von Steuersignalen basierend auf der Sollflugeigenschaft und den Steuerungsgesetzen; und
Übertragen der Steuersignale an ein oder mehrere Flugsteuerungselemente des Drehflüglers, um den Flug des Drehflüglers zu steuern.

6. Drehflügler gemäß Anspruch 5, wobei die eine oder mehreren Sollflugeigenschaften einen Sollkurs des Drehflüglers und/oder einen Sollquerneigungswinkel des Drehflüglers umfassen.

7. Drehflügler gemäß Anspruch 5 oder Anspruch 6, wobei die Piloteneingabe das Auswählen eines Flugmodus des Drehflüglers umfasst und wobei die Flugbahn basierend auf dem ausgewählten Flugmodus erzeugt wird; und optional oder vorzugsweise, wobei der Flugmodus einen Durchstartmodus umfasst.

8. Verfahren, umfassend:
Erzeugen einer Sollflugbahn für einen Drehflügler (101) durch ein Navigationssystem;
Übertragen von Signalen, die die Sollflugbahn repräsentieren, durch das Navigationssystem des Drehflüglers an einen Flugsteuerungsrechner, FCC, (205) des Drehflüglers, wobei der FCC eine Vielzahl von Steuerungsgesetzen zum Steuern des Drehflüglers umfasst, wobei die die Sollflugbahn repräsentierenden Signale Sollsignale umfassen, die eine oder mehrere Sollflugeigenschaften der Sollflugbahn repräsentieren;
Empfangen der Signale durch den FCC; und
Steuern eines oder mehrerer Flugsteuerungselemente des Drehflüglers durch den FCC, um den Drehflügler zu steuern, wobei das Steuern des einen oder der mehreren Flugsteuerungselemente auf der Sollflugbahn und der Vielzahl von Steuerungsgesetzen basiert.

9. Verfahren gemäß Anspruch 8, wobei das Navigationssystem des Drehflüglers ein Flugführungssystem ist.

10. Verfahren gemäß Anspruch 8 oder Anspruch 9, wobei die Sollflugbahn eine Änderung der Vertikalgeschwindigkeit des Luftfahrzeugs umfasst.

11. Verfahren gemäß einem der Ansprüche 8 bis 10, wobei die Steuerungsgesetze einen ersten Satz von Steuerungsgesetzen für einen ersten Bereich der Drehflüglergeschwindigkeit und einen zweiten Satz von Steuerungsgesetzen für einen zweiten Bereich der Drehflüglergeschwindigkeit umfassen.

12. Verfahren gemäß einem der Ansprüche 8 bis 11, ferner umfassend das Erzeugen einer anderen Sollflugbahn durch das Navigationssystem des Drehflüglers als Reaktion auf das Steuern eines oder mehrerer Flugsteuerungselemente des Drehflüglers durch den FCC.

## Revendications

1. Giravion (101), comprenant :
un système de commande de vol électrique (201) comprenant un ordinateur de commande de vol, FCC, (205) utilisable pour commander le vol du giravion en envoyant des signaux de commande à des éléments de commande de vol du giravion, dans lequel le FCC (205) comprend des lois de commande ; et
un système directeur de vol (250) couplé au FCC (205), dans lequel le système directeur de vol est configuré pour :
recevoir des données de trajectoire de vol entrées ; et déterminer une valeur souhaitée d'une caractéristique de vol du giravion (101), dans lequel la détermination de la valeur souhaitée de la caractéristique de vol est sur la base des données de trajectoire de vol ;
recevoir des signaux de capteur à partir d'un ou de plusieurs capteurs de giravion (207) pour déterminer une valeur actuelle de la caractéristique de vol ;
déterminer une différence entre la valeur souhaitée d'une caractéristique de vol et la valeur actuelle de la caractéristique de vol,
envoyer un signal d'erreur cible au FCC (205), le signal d'erreur cible indiquant la différence entre la valeur souhaitée d'une caractéristique de vol et la valeur actuelle de la caractéristique de vol ;
dans lequel le FCC (205) est configuré pour :
recevoir le signal d'erreur cible à partir du système directeur de vol (250) ;
déterminer des signaux de commande sur la base du signal d'erreur cible, en utilisant les lois de commande du système de commande de vol électrique (201) ; et
envoyer les signaux de commande aux éléments de commande de vol du giravion pour commander le vol du giravion sur la base du signal d'erreur cible.

2. Giravion (101) selon la revendication 1, dans lequel la caractéristique de vol souhaitée comprend une vitesse souhaitée du giravion.

3. Giravion (101) selon la revendication précédente, dans lequel le FCC (205) est en outre configuré pour découpler une commande de vol automatique du système directeur de vol à partir du FCC, le découplage étant sur la base d'une condition de vol actuelle du giravion.

4. Giravion selon la revendication précédente, dans lequel le FCC (205) est configuré pour déterminer des signaux de commande sur la base d'un mode de vol du FCC.

5. Giravion selon la revendication précédente, dans lequel :
le système directeur de vol (250) comprend :
un processeur ; et
un système de stockage non transitoire lisible par ordinateur stockant un programme destiné à être exécuté par le processeur, le programme incluant des instructions pour :
recevoir une entrée pilote ;
générer une trajectoire de vol sur la base de l'entrée pilote, la trajectoire de vol comprenant une ou plusieurs caractéristiques de vol souhaitées ; et
transmettre un signal représentant l'une ou les plusieurs caractéristiques de vol souhaitées au FCC (205) du giravion ;
dans lequel le FCC (205) comprend :
un processeur ;
des lois de commande et
un système de stockage non transitoire lisible par ordinateur stockant un programme destiné à être exécuté par le processeur, le programme incluant des instructions pour fournir la commande du giravion, les instructions pour fournir la commande du giravion incluant des instructions pour :
recevoir un signal représentant une ou plusieurs caractéristiques de vol souhaitées à partir du système directeur de vol du giravion ;
générer des signaux de commande sur la base de la caractéristique de vol souhaitées et des lois de commande ; et
transmettre les signaux de commande à un ou plusieurs éléments de commande de vol du giravion pour commander le vol du giravion.

6. Giravion selon la revendication 5, dans lequel l'une ou les plusieurs caractéristiques de vol souhaitées comprennent un cap souhaité du giravion et/ou une assiette latérale du giravion.

7. Giravion selon la revendication 5 ou la revendication 6, dans lequel l'entrée pilote comprend la sélection d'un mode de vol du giravion, et dans lequel la trajectoire de vol est générée sur la base du mode de vol sélectionné ; et, optionnellement ou de préférence, dans lequel le vol mode comprend un mode de remise des gaz.

8. Procédé, comprenant :
la génération, par un système de navigation d'un giravion (101), d'une trajectoire de vol souhaitée pour le giravion ;
la transmission, par le système de navigation du giravion, de signaux représentant la trajectoire de vol souhaitée à un ordinateur de commande de vol, FCC, (205) du giravion, le FCC comprenant une pluralité de lois de commande pour commander le giravion, dans lequel les signaux représentant la trajectoire de vol souhaitée comprennent des signaux cibles représentant une ou plusieurs caractéristiques de vol souhaitées de la trajectoire de vol souhaitée ;
la réception des signaux par le FCC ; et
la commande, par le FCC, d'un ou de plusieurs éléments de commande de vol du giravion pour commander le giravion, dans lequel la commande de l'un ou des plusieurs éléments de commande de vol est sur la base de la trajectoire de vol souhaitée et de la pluralité de lois de commande.

9. Procédé selon la revendication 8, dans lequel le système de navigation du giravion est un système directeur de vol.

10. Procédé selon la revendication 8 ou la revendication 9, dans lequel la trajectoire de vol souhaitée comprend un changement de vitesse verticale de l'aéronef.

11. Procédé selon l'une quelconque des revendications 8 à 10, dans lequel les lois de commande comprennent un premier ensemble de lois de commande pour une première plage de vitesse de giravion et un second ensemble de lois de commande pour une seconde plage de vitesse de giravion.

12. Procédé selon l'une quelconque des revendications 8 à 11, comprenant en outre la génération, par le système de navigation du giravion, d'une autre trajectoire de vol souhaitée en réponse au fait que le FCC commande un ou plusieurs éléments de commande de vol du giravion.
